Europäisches Patentamt

European Patent Office

Office européen des brevets

(11) Veröffentlichungsnummer : **0 098 330**
**B1**

(12) # EUROPÄISCHE PATENTSCHRIFT

(45) Veröffentlichungstag der Patentschrift :
22.01.86

(51) Int. Cl.⁴ : **B 60 K   5/12**, F 16 F   9/10

(21) Anmeldenummer : 82110449.4

(22) Anmeldetag : 12.11.82

(54) **Elastisches Gummilager.**

(30) Priorität : 09.07.82 DE 3225701

(43) Veröffentlichungstag der Anmeldung :
18.01.84 Patentblatt 84/03

(45) Bekanntmachung des Hinweises auf die Patenterteilung : 22.01.86 Patentblatt 86/04

(84) Benannte Vertragsstaaten :
DE FR GB IT

(56) Entgegenhaltungen :
EP-A- 0 040 290
DE-A- 2 727 244
DE-A- 2 950 109
DE-A- 3 125 464
FR-A- 1 109 456
FR-A- 1 112 598

(73) Patentinhaber : **Firma Carl Freudenberg**
**Höhnerweg 2**
**D-6940 Weinheim/Bergstrasse (DE)**

(72) Erfinder : **Hamaekers, Arno**
**Brunhildstrasse 27**
**D-6944 Hemsbach (DE)**
Erfinder : **Rudolf, Hans-Joachim**
**Anton-Günther-Strasse 9**
**D-2902 Rastede 1 (DE)**

(74) Vertreter : **Weissenfeld-Richters, Helga, Dr.**
**Höhnerweg 2**
**D-6940 Weinheim/Bergstrasse (DE)**

**0 098 330**

## Beschreibung

Die Erfindung betrifft ein elastisches Gummilager, bei dem eine Lagerplatte, ein ringförmig ausgebildetes Federelement und eine Bodenplatte einen mit einer hydraulischen Flüssigkeit gefüllten Arbeitsraum umschließen, der durch eine bei einem bestimmten Druck optimal durchströmte Drosselöffnung mit einem volumenveränderlichen, flüssigkeitsgefüllten Ausgleichsraum verbunden ist und bei dem zwischen beiden Räumen eine zwischen Gittern flüssigkeitsdicht eingespannte Trennwand aus einem weichelastischen Werkstoff vorgesehen ist, die wenigstens einen in Richtung der eingeleiteten Schwingungen beweglichen Teilbereich aufweist.

Auf ein Gummilager der vorstehend angesprochenen Art nimmt die europäische Patentanmeldung 40290 Bezug. Der in Richtung der eingeleiteten Schwingungen bewegliche Teilbereich der Trennwand hat einen axialen Abstand von den Stäben des Gitters, und kommt an diesen bei Einleitung von Schwingungen mit einer großen Amplitude zum Anschlag. Neben einer als unangenehm empfundenen Geräuschentwicklung kann vorzeitiger Verschleiß hiervon die Folge sein. Die Drosselöffnung ist durch unnachgiebige Wandungen begrenzt und das enthaltene Flüssigkeitsvolumen wird in Abhängigkeit von der Frequenz der eingeleiteten Schwingungen in der Drosselöffnung hin- und hergeschoben. Die bei der Verschiebung erzielte Geschwindigkeit folgt der Frequenz der eingeleiteten Schwingungen indessen nicht proportional, sondern sie erfährt oberhalb einer bestimmten Frequenz und damit oberhalb eines bestimmten Druckes einen starken Abfall, aus dem ein überproportionaler Druckanstieg in dem Arbeitsraum bei weiter steigender Frequenz resultiert. Neben einer die Isolierwirkung beeinträchtigenden Verhärtung der Tragfeder ist eine schlechte Dämpfungswirkung hiervon die Folge. Extremdrücke können auftreten und eine Zerstörung des Gummilagers bewirken.

Der Erfindung liegt die Aufgabe zugrunde, ein hydraulisch gedämpftes Gummilager zu entwickeln, insbesondere für die Lagerung eines Verbrennungsmotors in einem Kraftfahrzeug, das sich bei einer stark reduzierten Geräuschentwicklung und einer wesentlich vergrößerten Gebrauchsdauer durch eine gute Wirksamkeit auszeichnet sowohl hinsichtlich der Bedämpfung niederfrequenter Schwingungen als auch hinsichtlich der Isolierung hochfrequenter Schwingungen ab ca. 30 Hz.

Diese Aufgabe wird erfindungsgemäß bei einem Gummilager der eingangs genannten Art dadurch gelöst, daß das Gitter mit den Gitterstäben durchgehend an der Trennwand anliegt, daß der geringste gegenseitige Abstand von wenigstens zwei einander gegenüberliegenden Begrenzungsflächen der Gitteröffnungen der 1,5- bis 25fachen Dicke der Trennwand entspricht und daß wenigstens einer der in den Aussparungen des Gitters angeordneten Teilbereiche der Trennwand wenigstens eine Durchtrennung aufweist, die so bemessen ist, daß sich bei Überschreiten des bestimmten Druckes eine diesen stabilisierende, elastische Aufweitung zu einem Spalt ergibt.

Die Trennwand weist bei dem erfindungsgemäß vorgeschlagenen Gummilager im Gegensatz zu demjenigen der eingangs genannten Art keinerlei Teilbereiche auf, die bei Einleitung von Schwingungen mit einer großen Amplitude zwischen beiderseits zugeordneten Anschlägen beweglich sind. Es können insofern weder Berührungsgeräusche auftreten, noch ein durch die Berührung der aus einem metallischen Werkstoff bestehenden Gitter verursachter Verschleiß. Die wesentlich verlängerte Gebrauchsdauer dürfte bereits hierdurch mitbegründet sein.

Trotz dieses offenkundigen Vorteils zeichnet sich das vorgeschlagene Gummilager durch eine gute Isolierwirkung bei Einleitung von hochfrequenten Schwingungen mit einer niedrigen Amplitude aus. Das zu kompensierende Flüssigkeitsvolumen wird von der wechselseitig in die Aussparungen ausbauchenden Trennwand ohne großen Widerstand aufgenommen.

Die gute Dämpfungswirkung bei niederfrequenten Schwingungen einer großen Amplitude resultiert teils aus der Drosselwirkung der den Arbeits- mit dem Ausgleichsraum verbindenden Drosselöffnung, teils aus derjenigen, der sich zu einem Spalt öffnenden Durchtrennung. Das vorgeschlagene Gummilager eignet sich aus diesem Grunde besonders gut als Motorlager für ein Kraftfahrzeug.

Die Gründe für das ausgezeichnete Betriebsverhalten und die gute Gebrauchsdauer des vorgeschlagenen Gummilagers können wie folgt erklärt werden. Die die Trennwand in den Gitteröffnungen durchschneidenden Durchtrennungen klaffen beim Ausbauchen oberhalb des bestimmten Druckes auf und begünstigen eine Druckangleichung zwischen dem Arbeitsraum und dem Ausgleichsraum. Das Auftreten von Extremdrücken wird auf diese Weise zuverlässig vermieden und damit das Auftreten von Kavitationserscheinungen, die mit zu der als unangenehm empfundenen Geräuschentwicklung beitragen.

In bezug auf die Erzielung einer guten Dämpfungswirkung ist es von entscheidender Bedeutung, daß die Durchtrennungen so eng ausgeführt werden, daß im unverformten Zustand und unterhalb des bestimmten Druckes ein Flüssigkeitsübertritt weitestgehend unterbunden ist. Die Breite soll deshalb nicht mehr betragen als das 0,2fache der Dicke der Trennwand, vorteilhafter noch soll die Durchtrennung aus einem ohne Werkstoffentnahme erzeugten Schnitt bestehen, wie beispielsweise durch einen einfachen Stanzvorgang erzielbar.

Die Länge der Durchtrennung ist nach unten durch einen Wert begrenzt, der der dreifachen Dicke der Trennwand entspricht. Sie ist nach oben nicht begrenzt, so lange gewährleistet ist, daß sich die beim Ausbauchen der Trennwand voneinander entfernenden, im Bereich der Durchtrennung gegenüberliegen-

2

den Flächen bei einer Richtungsumkehr wieder in die ursprüngliche Position zurückbewegen. Bei einer Länge bis zu maximal der 20fachen Dicke der Trennwand ist das in aller Regel der Fall. Größere Verhältnisse erfordern eine Einzelüberprüfung der Funktionssicherheit. Ist diese gestört, dann kann Abhilfe durch Verwendung identischer Gitter geschaffen werden, die einander spiegelbildlich zugeordnet sind und deren Gitterstäbe die Durchtrennung der Trennwand in kürzeren Abständen überbrücken und dabei festlegen. Im übrigen öffnet sich die Durchtrennung beim Überschreiten des Grenzdruckes nur soweit zu einem Schlitz, wie erforderlich, den Druck konstant zu halten. Eine Variation der Länge wird daher durch die Dimensionierung und die Elastizität der Trennwand selbsttätig kompensiert. Der Grenzdruck entspricht dem Druck, bei dem die Drosselöffnung optimal durchströmt wird.

Die Dicke und die Elastizität der Trennwand sowie der Offenflächenanteil und die Größe der Gitteröffnungen müssen so bemessen werden, daß das bei hohen Frequenzen einer niedrigen Amplitude von der schwingenden Lagerplätte und dem Federelement verdrängte Flüssigkeitsvolumen demjenigen der ohne großen Widerstand ausbauchenden Bestandteile der Trennwand entspricht. Die Durchtrennung darf dabei keine nennenswerte Erweiterung des Querschnittes erfahren. Flüssigkeit passiert in dieser Betriebssituation auch die Drosselöffnung nicht in einem nennenswerten Maße.

Bei Einleitung von Schwingungen einer großen Amplitude und einer niedrigen Frequenz vergrößert sich mit steigender Frequenz der auf die Trennwand einwirkende Druck. Dieser Drucksteigerung entgegen wirkt der zunehmende Übertritt von Flüssigkeit durch die Drosselöffnung, der beim Erreichen des bestimmten Druckes sein Optimum erreicht, und danach wieder fällt. Dieser Abfall wird bei der vorgeschlagenen Ausführung verhindert durch die sich zu einem Schlitz eines angepaßten Querschnittes öffnende Durchtrennung. Diese ergänzt den zur Verfügung stehenden Übertrittsquerschnitt, wirkt dadurch druckstabilisierend und gewährleistet einen gedrosselten, optimalen Volumenaustausch an Flüssigkeit zwischen den beiden Räumen. Das Gummilager weist dadurch ein gutes Dämpfungsverhalten in einem breiten Frequenzbereich auf, was es wesentlich von einer Ausführung mit starrem oder sich spontan verminderndem oder spontan vergrößerndem Drosselquerschnit unterscheidet. Beispielsweise in bezug auf die Lagerung eines Verbrennungsmotors in einem Kraftfahrzeug ist ein solcher Effekt erwünscht, um die beim Überfahren von Bodenunebenheiten auftretenden Stuckerbewegungen der Motors zu unterdrücken. Eine den Fahrkomfort beeinträchtigende elastische Verhärtung des Federelementes tritt nicht ein.

Die Gitter können symmetrisch oder unsymmetrisch ausgebildet und der Trennwand spiegelbildlich oder versetzt zugeordnet sein. Im gleichen Sinne ist die Verwendung einer Trennwand möglich, die senkrecht durch einen geraden oder auch modifizierten Schnitt durchtrennt ist.

Unter letzterem ist eine gleich- oder ungleichförmig gekrümmte, eine abgeknickte oder eine sich schräg zur Oberfläche erstreckende Ausführungsform zu verstehen sowie eine unsymmetrische Zuordnung zu der Aussparung, was ebenso wie die Verwendung von Gittern mit unterschiedlich großen Aussparungen eine unterschiedliche Durchlässigkeit der Durchtrennung in beiden Richtungen ergibt. Die genannte Wirkung läßt sich durch die Kombination von mehreren der genannten Merkmale wesentlich steigern. Es können auch mehrere, gegebenenfalls unterschiedlich ausgebildete Durchtrennungen einander musterartig zugeordnet werden, wobei das Muster aus parallel zueinander verlaufenden Durchtrennungen besteht, die einen gegenseitigen Abstand haben, der mindestens so groß ist wie die Dicke der Trennwand. Eine entsprechende Ausführung läßt sich am einfachsten erhalten durch einfaches Ausstanzen aus einem Bahnenmaterial mit ebener oder reliefartig profilierter Oberfläche aus elastischem Gummi oder Kunststoff, das mit entsprechend angeordneten Durchtrennungen versehen ist.

Die ausgestanzte Scheibe wird so zwischen den Gittern verpreßt, daß mindestens einer Gitteröffnung wenigstens eine Durchtrennung zugeordnet ist. Bei entsprechend dichter Anbringung von Durchtrennungen bereitet eine entsprechende Zuordnung keine besondere Schwierigkeit, und kann gegebenenfalls automatisch erfolgen. Die Verpressung der Trennwand zwischen den Gittern muß einen sicheren Halt gewährleisten, ohne zu einem Aufklaffen der Durchtrennung in der Ruhelage zu führen. Die Verwendung eines an den Oberflächen mit Noppen oder Rippen versehenen Materials erleichtert die Einhaltung dieser Bedingung. Hinsichtlich der gegenseitigen Zuordnung von mehreren Durchtrennungen bestehen vielfältige Möglichkeiten. Nach einer vorteilhaften Ausgestaltung ist es vorgesehen, daß das aus den Durchtrennungen gebildete Muster aus auf einander durchschneidenden Linienzügen angeordneten Durchtrennungen besteht, deren gegenseitiger Abstand mindestens so groß ist wie die Dicke der Trennwand.

Der Gegenstand der vorliegenden Erfindung wird nachfolgend anhand der in der Anlage beigefügten Zeichnungen näher erläutert. Es zeigen :

Figur 1 ein Gummilager, bei dem der Ausgleichsraum durch einen flexiblen Rollbalg begrenzt ist.

Figur 2 eine Ausführung ähnlich Figur 1, bei dem jedoch der Ausgleichsraum durch einen Federring begrenzt ist.

Figur 3 eine Ausführung ähnlich Figur 2, bei der den Ausgleichsraum begrenzende Federring eine Bodenhülse umschließt, die durch einen Bolzen starr mit der Lagerplatte verbunden ist.

Figuren 4 bis 15 verschiedene Ausführungen von Gittern in der Draufsicht mit in den Gitteröffnungen sichtbare, jeweils wenigstens eine Durchtrennung aufweisende Trennwand.

Figur 16 zwei spiegelbildlich montierte Gitter in quergeschnittener Darstellung, die eine in Ruhestellung befindliche Trennwand zwischen sich einschließen.

Figur 17 die Gitter mit eingeschlossener Trennwand gemäß Figur 16 bei maximaler Ausbauchung der Trennwand.

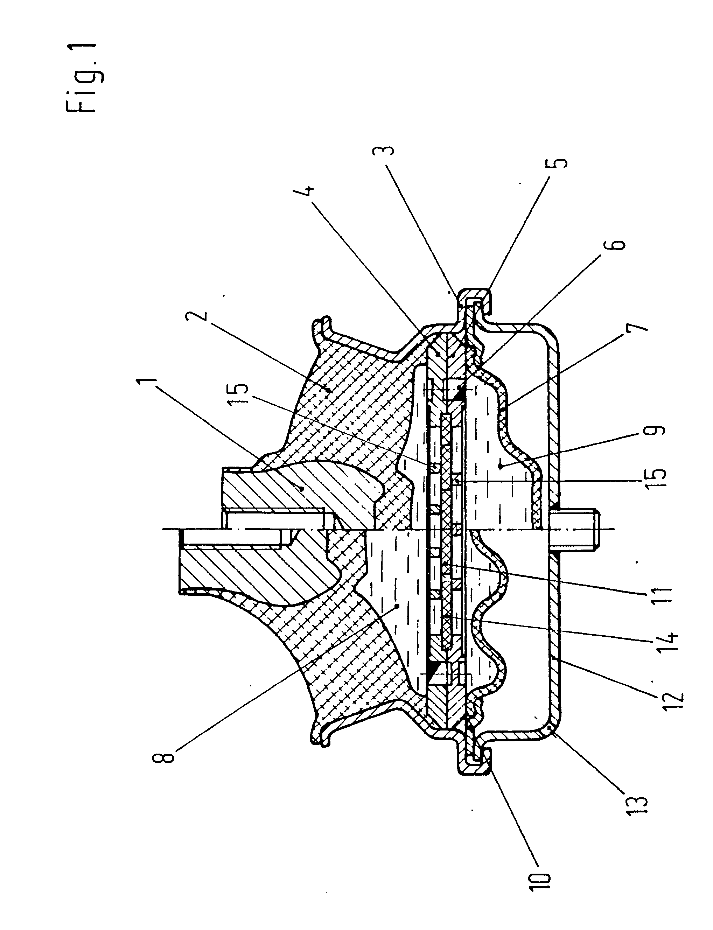

Das Gummilager gemäß Figur 1 besteht aus einer Lagerplatte 1, die durch ein hohlkegeliges Federelement 2 mit der Bodenplatte 3 verbunden ist. Diese trägt zugleich eine Anordnung aus den beiden Gittern 4, 5, die von einer ineinander übergehenden, den offenen Bereich spiralig umschließenden Drosselöffnung 6 in axialer Richtung durchdrungen sind und zugleich die Trennwand 11 einschließen. Diese hat eine Dicke von 1,5 mm, besteht aus Gummi mit einer Härte Shore A von 44 und ist elastisch verspannt zwischen den beiden Gittern und sämtlichen Gitterstäben 15.

Die Bodenplatte 3 ist durch eine Umbördelung mit der tassenförmig ausgebildeten Bodenkappe 12 verbunden. Diese trägt einen Befestigungsbolzen zur Verschraubung an einer Kraftfahrzeugkarosserie und sie ist mit einer Entlüftungsöffnung 13 versehen, um einen Druckaufbau im Inneren zu unterbinden.

Zwischen dem umlaufenden Flansch der Bodenkappe 12 und der Umbördelung der Bodenplatte 3 ist außerdem eine Klemmplatte 10 eingeschlossen, die der flüssigkeitsdichten Verankerung des Rollbalges 7 dient. Dieser besteht aus einer flexiblen Folie, und begrenzt den eingentlichen Ausgleichsraum 9. Der Arbeitsraum 8, der Ausgleichsraum 9 und die Drosselöffnung 6 sind vollständig mit einer hydraulischen Flüssigkeit gefüllt.

Die Gitteröffnungen der Gitter 4, 5 sind kreisförmig begrenzt und sie haben im ersten Falle einen Durchmesser von jeweils 8 mm, im letzten Falle einen Durchmesser von jeweils 12 mm. Die Trennwand ist in jeder Gitteröffnung durch einen geraden Schnitt durchtrennt, wobei die Durchtrennung den Gitteröffnungen des Gitters 4 mittig zugeordnet ist, den Gitteröffnungen des Gitters 5 hingegen außerhalb der Mitte. Sämtliche an der Trennwand anliegenden Kanten der Gitter sind gerundet.

Die geschnittene Darstellung gemäß Figur 1 zeigt das Gummilager im linken Teil mit einer extrem ausgefederten Lagerplatte 1, im rechten Teil mit einer extrem eingefederten Lagerplatte. Der Rollbalg 7 nimmt dementsprechend ebenfalls extreme Stellungen ein, die nicht überschritten werden, so daß eine Berührung zwischen beweglichen und feststehenden Teilen des Gummilagers ausgeschlossen ist.

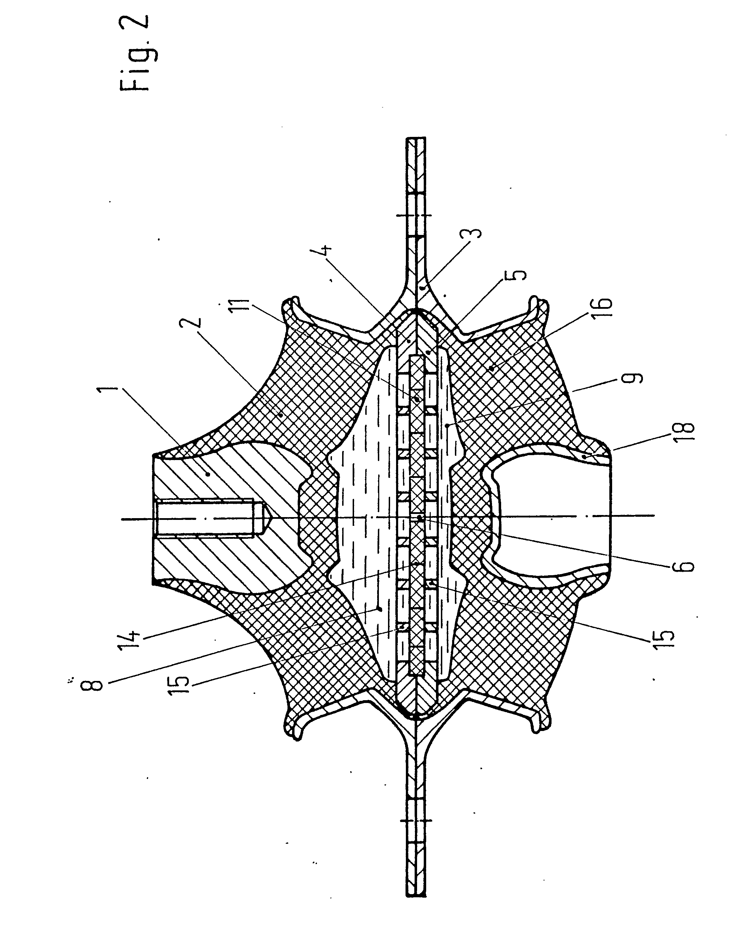

Die Ausführung nach Figur 2 unterscheidet sich von der vorstehend besprochenen Ausführung dadurch, daß der untere Arbeitsraum durch einen elastischen, hohlkegelig ausgebildeten Federring begrenzt ist, der zugleich die Bodenhülse 18 umschließt. Die Drosselöffnung ist bei dieser Ausführung nicht ein fester Bestandteil der Gitter, sondern sie durchdringt die Trennwand als zylindrische Bohrung mit einem Durchmesser von 7 mm. Auch in diesem Falle liegen die Gitter mit den Gitterstäben 15 durchgehend an der Oberfläche der Trennwand an, sie sind jedoch einander spiegelbildlich zugeordnet und verleihen der Trennwand dadurch einen festeren Halt.

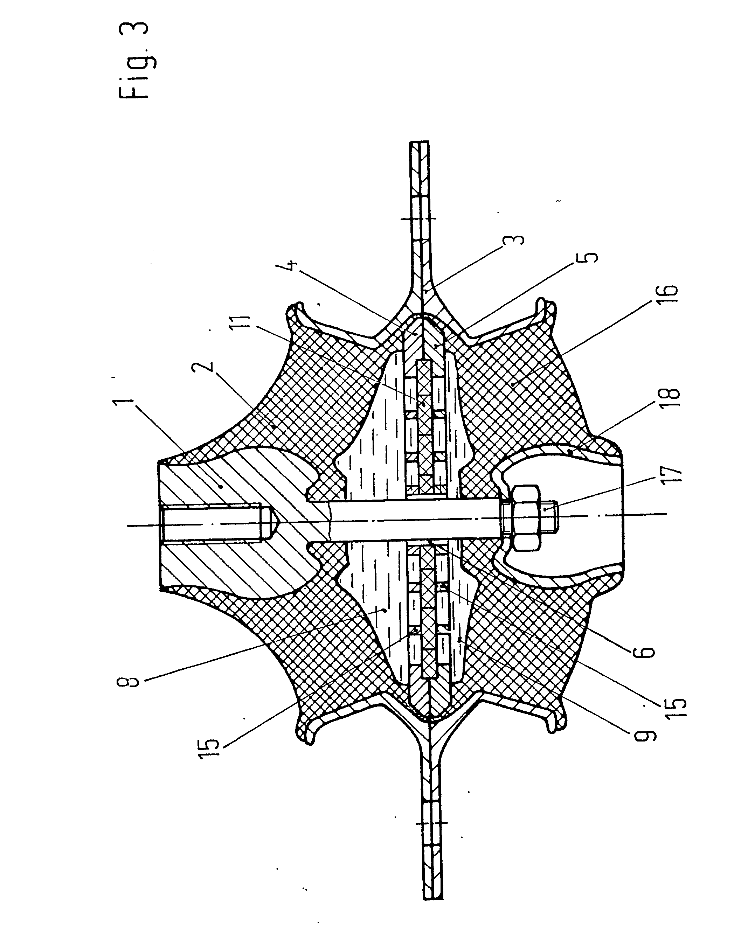

Die Ausführung nach Figur 3 ist derjenigen nach Figur 2 ähnlich. Die Lagerplatte 1 und die Bodenhülse 18 sind in diesem Falle jedoch durch einen Bolzen starr verschraubt, wodurch sich die Federkräfte des Federringes 16 und des Federelementes 2 unmittelbar ergänzen. Die Drosselöffnung 6 wird gebildet durch den Spalt zwischen dem Bolzen 17 und den beiden Gittern 4, 5 bzw. dem Bolzen und der Aussparung der Trennwand 11. Im übrigen gelten die vorstehenden Ausführungen.

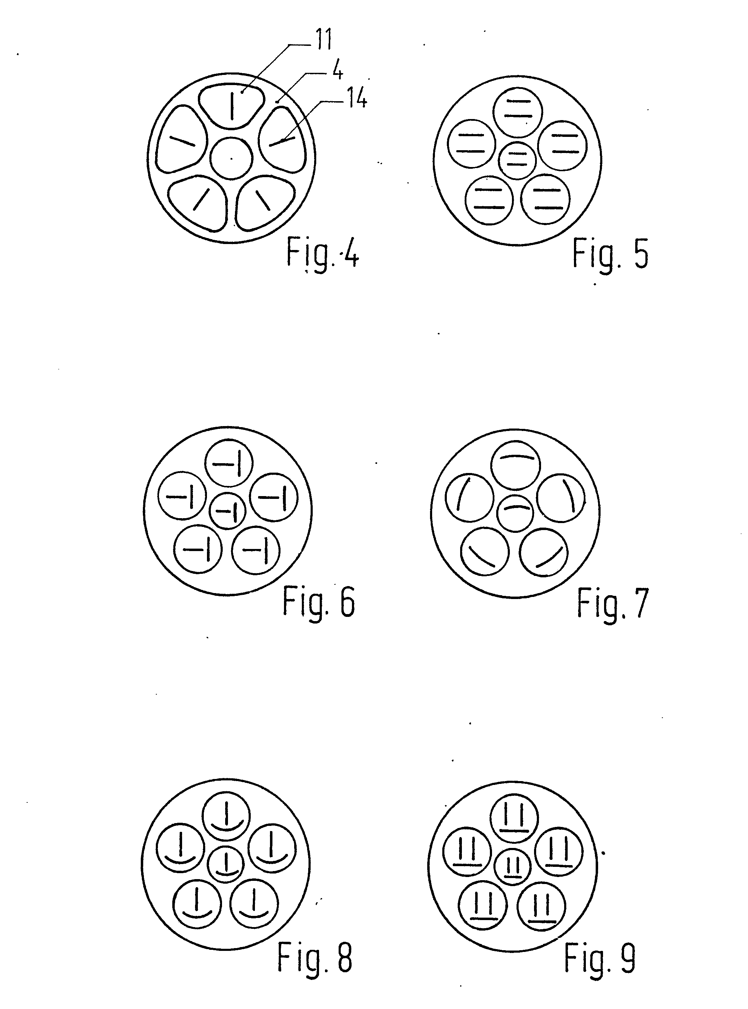

In den Figuren 4 bis 15 sind unterschiedliche Ausführungsformen von Gittern wiedergegeben, die mit einem nicht sichtbaren, spiegelbildlich zugeordneten, zweiten Gitter hinterlegt sind, wobei beide Gitter eine Trennwand einschließen und zwischen sich durchgehend verspannen. In den Gitteröffnungen ist jeweils wenigstens eine Durchtrennung sichtbar, die die Trennwand in senkrechter Richtung durchschneidet. Die Trennwand hat im allgemeinen eine Dicke von etwa 0,5 bis 3 mm. Sie besteht vorteilhafterweise aus einem gummieelastischen Werkstoff mit einer Härte Shore A von ca. 40 bis 45.

Die Gitteröffnungen sind bei einer Ausführung gemäß Figur 4 im äußeren Bereich dreieckig begrenzt, in der Mitte hingegen kreisförmig. Sämtliche Kanten sind gerundet, um eine Beschädigung der Trennwand unter Betriebsbedindungen zu vermeiden. Mittig ist einigen der Gitteröffnungen eine einzige, geradlinig ausgeführte Durchtrennung zugeordnet, die die Trennwand ohne Werkstoffentnahme senkrecht durchschneidet. Die Länge einer jeden Durchtrennung beträgt bei einer Dicke der Trennwand von 1,5 mm 7 mm.

Bei der Ausführung nach Figur 5 sind sämtliche Gitteröffnungen kreisförmig begrenzt, und in jeder einzelnen Gitteröffnung sind zwei sich parallel zueinander erstreckende, geradlinige Durchtrennungen sichtbar. Auch diese haben jeweils eine Länge von 7 mm. Der gegenseitige Abstand beträgt bei einer Dicke der Trennwand von 1,5 mm 4 mm.

Die Ausführungen nach den Figuren 6 bis 11 entsprechen hinsichtlich der verwendeten Gitter und der Dicke der Trennwand derjenigen nach Figur 5.

In Figur 6 sind in jeder Gitteröffnung zwei einander T-förmig zugeordnete Durchtrennungen sichtbar, deren gegenseitiger Abstand 2,4 mm beträgt und die jeweilige Länge 7 mm.

Figur 7 zeigt eine Ausführung, bei der sich die Durchtrennungen parallel zum Außenumfang der Trennwand erstrecken. Die mittlere Öffnung enthält eine kreissegmentartig ausgebildete Durchtrennung.

Figur 8 zeigt eine Ausführung, bei der in jeder Gitteröffnung wiederum zwei Durchtrennungen angeordnet sind. Eine dieser Durchtrennungen ist geradlinig ausgeführt und ihre Verlängerung schneidet mittig eine kreissegmentförmig ausgeführte Durchtrennung. Der gegenseitige Abstand beträgt 2,4 mm, die jeweilige Länge 7 bzw. 8,4 mm.

Die Ausführung nach Figur 9 ähnelt derjenigen nach Figur 8 mit der Abweichung, daß zwei senkrecht angeordnete, parallel zueinander verlaufende Durchtrennungen einer waagerecht verlau-

4

fenden Durchtrennung zugeordnet ist. Der gegenseitige Abstand beträgt jeweils 2,4 mm, die Länge 7 mm.

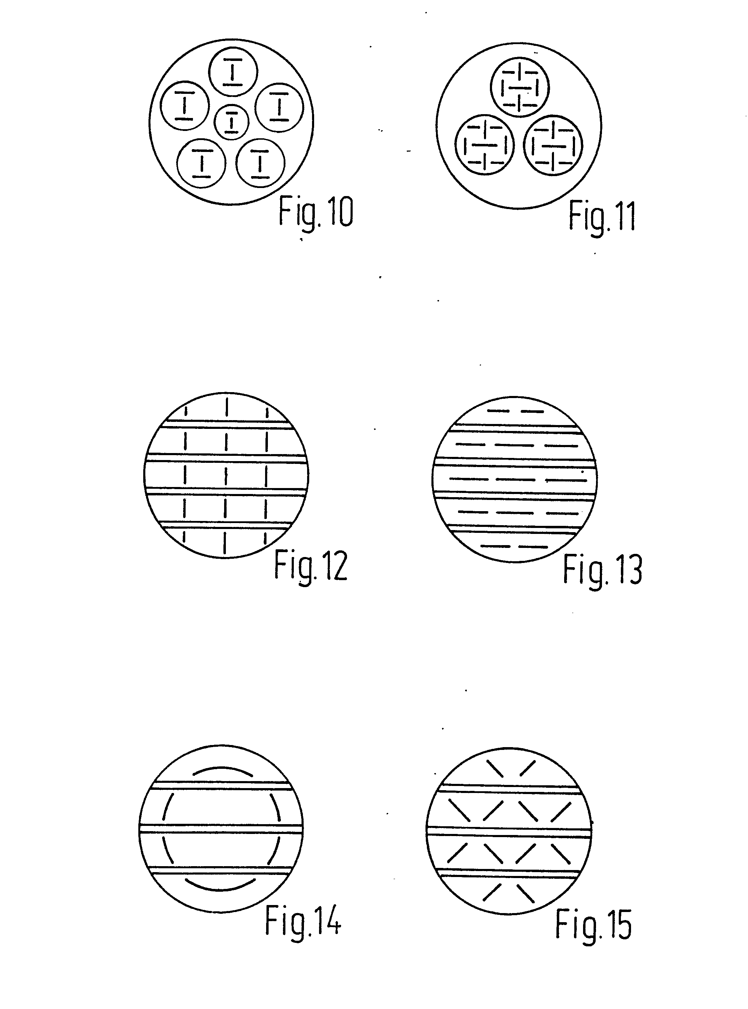

Figur 10 nimmt Bezug auf eine Ausführung, bei der drei geradlinig ausgeführte Durchtrennungen einander so zugeordnet sind, daß die Verlängerung eines senkrecht angeordneten Schnittes beiderseits zwei waagerecht verlaufende Durchtrennungen mittig schneidet. Der gegenseitige Abstand beträgt jeweils 2,4 mm, die Länge 7 mm.

Figur 11 nimmt Bezug auf eine Ausführung, bei der eine Vielzahl von Schnitten auf Linienzügen angeordnet ist, die einander senkrecht durchschneiden. Sämtliche Durchtrennungen haben eine identische Länge und einen gleichbleibenden gegenseitigen Abstand.

Die Figuren 12 bis 15 nehmen Bezug auf Ausführungen, bei denen die einander spiegelbildlich zugeordneten Gitter nur parallel zueinander verlaufende Gitterstäbe aufweisen.

Die Trennwand ist bei der Ausführung nach Figur 12 mit parallel zueinander verlaufenden Durchtrennungen versehen, die senkrecht zur Erstreckung der Gitterstäbe orientiert sind.

Bei der Ausführung nach Figur 13 sind die Durchtrennungen parallel zur Erstreckung der Gitterstäbe orientiert. Sie sind auf durchgehenden, geradlinigen Linienzügen angeordnet, haben eine Länge von jeweils 12 mm und sind durch einen Steg mit einer Breite von 3 mm voneinander getrennt.

Bei der Ausführung nach Figur 14 verläuft eine durchgehend in sich geschlossene Durchtrennung parallel zum Außenumfang der Trennwand.

Bei der Ausführung nach Figur 15 sind die einzelnen Durchtrennungen der Erstreckung der Gitterstäbe unter einem Winkel von 45° zugeordnet.

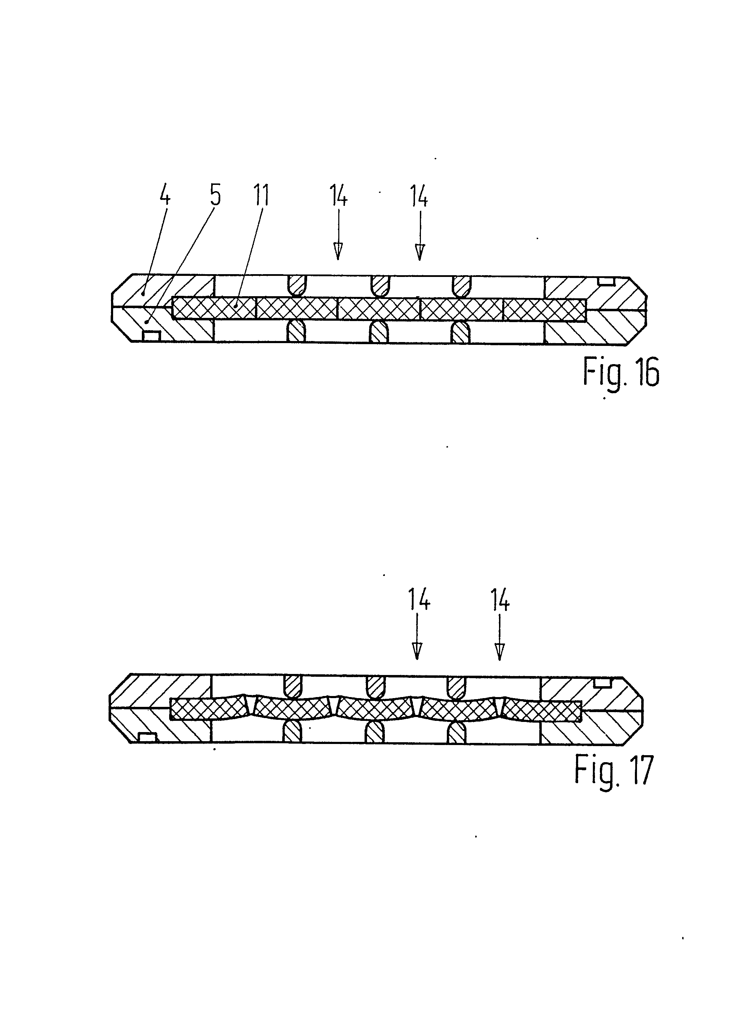

Durch die Figuren 16 und 17 wird das Betriebsverhalten der Trennwand des vorgeschlagenen Gummilagers nochmals erläutert. Figur 16 zeigt die Trennwand in der Ruhestellung. Diese ist flächig zwischen den spiegelbildlich einander zugeordneten Gittern 4, 5 eingespannt und die Begrenzungsflächen der ohne Werkstoffentnahme erzeugten Durchtrennungen 14 ruhen unmittelbar aufeinander. Die Trennwand ist dadurch in der dargestellten Situation vollkommen flüssigkeitsundurchlässig.

Figur 17 zeigt die Ausführung gemäß Figur 16 in einer Betriebssituation, bei der die Unterseite mit einem höheren hydraulischen Druck beaufschlagt ist. Es ist deutlich erkennbar, daß die Trennwand durch die Gitterstäbe an einem Ausweichen gehindert wird, daß sie jedoch in den Gitteröffnungen ausbaucht, wobei die Durchtrennungen 14 zu einem Spalt erweitert werden. Dieser ist bei dem zur Diskussion stehenden System nur kurzzeitig geöffnet, genügt jedoch, das Auftreten von Kavitationserscheinungen zu unterbinden. Das vorgeschlagene Gummilager zeichnet sich aus diesem Grunde nicht nur durch ein gutes Isolierverhalten bei Einleitung hochfrequenter Schwingungen und durch ein gutes Dämpfungsverhalten bei Einleitung niederfrequenter Schwingungen aus, sondern zusätzlich durch eine ausgezeichnete Gebrauchsdauer bei minimaler Geräuschentwicklung.

Bezugszeichenliste

1 Lagerplatte
2 Federelement
3 Bodenplatte
4 Gitter
5 Gitter
6 Drosselöffnung
7 Rollbalg
8 Arbeitsraum
9 Ausgleichsraum
10 Klemmplatte
11 Trennwand
12 Bodenkappe
13 Entlüftungsöffnung
14 Durchtrennung
15 Gitterstab
16 Federring
17 Bolzen
18 Bodenhülse

**Patentansprüche**

1. Elastisches Gummilager, bei dem eine Lagerplatte (1), ein ringförmig ausgebildetes Federelement (2) und eine Bodenplatte (3) einen mit einer hydraulischen Flüssigkeit gefüllten Arbeitsraum (8) umschließen, der durch eine bei einem bestimmten Druck optimal durchströmte Drosselöffnung (6) mit einem volumenveränderlichen, flüssigkeitsgefüllten Ausgleichsraum (9) verbunden ist, und bei dem zwischen den beiden Räumen eine zwischen Gittern (4, 5) flüssigkeitsdicht eingespannte Trennwand (11) aus einem weichelastischen Werkstoff vorgesehen ist, die wenigstens einen in Richtung der eingeleiteten

5

Schwingungen beweglichen Teilbereich aufweist, dadurch gekennzeichnet, daß das Gitter (4, 5) mit den Gitterstäben (15) durchgehend an der Trennwand (11) anliegt, daß der geringste gegenseitige Abstand von zwei einander gegenüberliegenden Begrenzungsflächen der Gitteröffnungen der 1,5- bis 25fachen Dicke der Trennwand entspricht, und daß wenigstens einer der den Gitteröffnungen zugeordneten Teilbereiche der Trennwand wenigstens eine Durchtrennung (14) aufweist, die so bemessen ist, daß sich bei Überschreiten des bestimmten Druckes eine diesen stabilisierende, elastische Aufweitung zu einem Spalt ergibt.

2. Gummilager nach Anspruch 1, dadurch gekennzeichnet, daß die Durchtrennung aus einem ohne Werkstoffentnahme erzeugten Schnitt besteht.

3. Gummilager nach Anspruch 1, dadurch gekennzeichnet, daß die Durchtrennung aus einem Schnitt mit einer Breite von maximal der 0,2 fachen Dicke der Trennwand besteht.

4. Gummilager nach Anspruch 1 bis 3, dadurch gekennzeichnet, daß die Durchtrennung eine Länge von wenigstens der 3fachen Dicke der Trennwand aufweist.

5. Gummilager nach Anspruch 1 bis 4, dadurch gekennzeichnet, daß die Durchtrennung geradlinig verläuft.

6. Gummilager nach Anspruch 1 bis 4, dadurch gekennzeichnet, daß die Durchtrennung einen gleichförmig oder einen ungleichförmig gekrümmten Verlauf hat.

7. Gummilager nach Anspruch 1 bis 6, dadurch gekennzeichnet, daß mehrere Durchtrennungen einander in einem Muster zugeordnet sind.

8. Gummilager nach Anspruch 1 bis 7, dadurch gekennzeichnet, daß das Muster aus parallel zueinander verlaufenden Durchtrennungen besteht, deren gegenseitiger Abstand mindestens so groß ist wie die Dicke der Trennwand.

9. Gummilager nach Anspruch 8, dadurch gekennzeichnet, daß das Muster aus aufeinander durchschneidenden angeordneten Durchtrennungen besteht, deren gegenseitiger Abstand mindestens so groß ist wie die Dicke der Trennwand.

10. Gummilager nach Anspruch 1 bis 9, dadurch gekennzeichnet, daß die Durchtrennung die Trennwand schräg durchschneidet.

11. Gummilager nach Anspruch 1 bis 10, dadurch gekennzeichnet, daß die Durchtrennung die Trennwand außerhalb der Mitte wenigstens einer Gitteröffnung durchschneidet.

12. Gummilager nach Anspruch 1 bis 11, dadurch gekennzeichnet, daß die Trennwand mindestens einseitig eine genoppte und/oder gerippte Oberfläche aufweist.

### Claims

1. An elastic rubber support in which a support plate (1), a spring element (2) of annular form and a base plate (3) enclose a working chamber (8), which is filled with a hydraulic fluid and is connected to a fluidfilled working chamber (9) of variable volume by a throttle opening (6) through which fluid flows optimally at a defined pressure, and in which a dividing wall (11) made of a soft-elastic material and clamped fluid-tight between two grids (4, 5) is provided which has at least one partial area which can be moved in the direction of the induced vibrations, characterised in that the grids (4, 5) sit with their grid bars (15) continuously against the dividing wall (11), that the minimum mutual spacing of two oppositely located terminating surfaces of the grid openings is from 1,5 to 25 times the thickness of the dividing wall, and that at least one of the dividing wall partial areas allocated to the grid openings has at least one severance (14) through it which is of such a size that, when the defined pressure is exceeded, an elastic expansion results which stabilises this pressure and causes a gap to form.

2. A rubber support according to claim 1, characterised in that the severance consists of a cut produced without material removal.

3. A rubber support according to claim 1, characterised in that the severance consists of a cut with a width of a maximum of 0,2 times the thickness of the dividing wall.

4. A rubber support according to any of claims 1 to 3, characterised in that the severance has a length of at least 3 times the thickness of the dividing wall.

5. A rubber support according to any of claims 1 to 4, characterised in that the severance extends in a straight line.

6. A rubber support according to any of claims 1 to 4, characterised in that the severance extends in a uniform or non-uniform curve.

7. A rubber support according to any of claims 1 to 6, characterised in that a plurality of severances are arranged in a pattern relative to one another.

8. A rubber support according to any of claims 1 to 7, characterised in that the pattern consists of severances running parallel to one another, the spacing between these severances being at least as large as the thickness of the dividing wall.

9. A rubber support according to claim 8, characterised in that the pattern consists of severances which are arranged so as to cut through one another, the spacing between these severances being at least as large as the thickness of the dividing wall.

10. A rubber support according to any of claims 1 to 9, characterised in that the severance cuts through the dividing wall at an oblique angle.

11. A rubber support according to any of claims 1 to 10, characterised in that the severance cuts through the dividing wall outside the centre of a least one grid opening.

12. A rubber support according to any of claims 1 to 11, characterised in that the dividing wall has a knobbed and/or ribbed surface, at least on one side.


## Revendications

1. Support élastique en caoutchouc dans lequel une plaque de support (1), un élément élastique annulaire (2) et une plaque de base (3) entourent une enceinte de travail (8) remplie de liquide hydraulique et qui est reliée à une enceinte d'équilibrage (9) remplie de liquide et à volume variable, par une ouverture de réglage (6) par laquelle passe un débit optimal sous une pression déterminée, et dans lequel une paroi séparatrice (11) en matériau souple et élastique, serrée d'une manière étanche aux liquides entre des grillages (4, 5) est prévue entre les deux enceintes, cette paroi présentant au moins une partie mobile dans la direction des vibrations induites, caractérisé en ce que le grillage (4, 5) appuie complètement sur la paroi séparatrice (11) par les barreaux de grillage (15), en ce que le plus faible intervalle mutuel de deux surfaces limites opposées l'une à l'autre des ouvertures du grillage correspond à 1,5 à 25 fois l'épaisseur de la paroi séparatrice et en ce qu'au moins une des parties de la paroi séparatrice correspondant aux ouvertures du grillage présente, au moins, une coupure (14) dimensionnée de manière à ce qu'en cas de dépassement de la pression déterminée, il en résulte un élargissement élastique stabilisant cette pression et constituant une fente.

2. Support en caoutchouc selon la revendication 1, caractérisé en ce que la coupure est constituée par une coupe effectuée sans enlèvement de matière.

3. Support en caoutchouc selon la revendication 1, caractérisé en ce que la coupure est constituée par une découpe ayant une largeur égale, au maximum, à 0,2 fois l'épaisseur de la paroi séparatrice.

4. Support en caoutchouc selon l'une quelconque des revendications 1 à 3, caractérisé en ce que la coupure présente une longueur égale à au moins 3 fois l'épaisseur de la paroi séparatrice.

5. Support en caoutchouc selon l'une quelconque des revendications 1 à 4, caractérisé en ce que la coupure est disposée en ligne droite.

6. Support en caoutchouc selon l'une quelconque des revendications 1 à 4, caractérisé en ce que la coupure présente une disposition courbée, uniforme ou non uniforme.

7. Support en caoutchouc selon l'une quelconque des revendications 1 à 6, caractérisé en ce que plusieurs coupures constituent ensemble un dessin.

8. Support en caoutchouc selon l'une quelconque des revendications 1 à 7, caractérisé en ce que le dessin est constitué de coupures disposées parallèlement les unes aux autres, dont les intervalles mutuels sont au moins égaux à l'épaisseur de la paroi séparatrice.

9. Support en caoutchouc selon la revendication 8, caractérisé en ce que le dessin est constitué de coupures disposées pour se recouper l'une l'autre et dont l'intervalle mutuel est au moins égal à l'épaisseur de la paroi séparatrice.

10. Support en caoutchouc selon l'une quelconque des revendications 1 à 9, caractérisé en ce que la coupure traverse obliquement la paroi séparatrice.

11. Support en caoutchouc selon l'une quelconque des revendications 1 à 10, caractérisé en ce que la coupure traverse la paroi séparatrice en dehors du milieu d'au moins une ouverture de grillage.

12. Support en caoutchouc selon l'une quelconque des revendications 1 à 11, caractérisé en ce que la paroi séparatrice présente, au moins d'un côté, un noppage et/ou un nervurage de la surface.

Fig. 1

0 098 330

Fig. 2

8
1
14
15
2
11
4
3
5
16
9
15
6
18

0 098 330

2

Fig. 3

0 098 330

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17